(19) Europäisches Patentamt
European Patent Office
Office européen des brevets

(11) EP 2 157 116 A1

(12) **EUROPEAN PATENT APPLICATION**
published in accordance with Art. 153(4) EPC

(43) Date of publication:
**24.02.2010 Bulletin 2010/08**

(21) Application number: **08765554.4**

(22) Date of filing: **06.06.2008**

(51) Int Cl.:
***C08G 64/34*** *(2006.01)*

(86) International application number:
**PCT/JP2008/060813**

(87) International publication number:
**WO 2008/150033 (11.12.2008 Gazette 2008/50)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.06.2007 JP 2007153322**

(71) Applicant: **The University of Tokyo**
**Bunkyo-Ku**
**Tokyo 113-8654 (JP)**

(72) Inventors:
- **NOZAKI, Kyoko**
  **Tokyo 113-8654 (JP)**
- **NAKANO, Koji**
  **Tokyo 113-8654 (JP)**

(74) Representative: **Ulmann, Catherine Claire**
**Santarelli**
**14, avenue de la Grande Armée**
**75017 Paris (FR)**

# (54) EPOXIDE-CARBON DIOXIDE STEREOSELECTIVE ALTERNATING COPOLYMER

(57) The present invention provides a method for manufacturing polycarbonate, which has a high conversion rate of a propylene oxide material into a polymer and can control stereoregularity of the macromolecular structure, and a catalytic compound for the manufacturing method.

The manufacturing method of the present invention is a method for manufacturing a polycarbonate copolymer by copolymerizing an epoxide compound as a monomer with carbon dioxide in the presence of a planar tetracoordinate-type cobalt-Schiff base complex, wherein a ligand of the Schiff base is N,N'-bis(2-hydroxybenzylidene) ethylenediamine, N,N'-bis(2-hydroxybenzylidene) phenylenediamine, or a derivative thereof, and a methyl group substituted with an amino group having an asymmetrical carbon atom or an asymmetrical axis is introduced to the 3- and/or 3'-position of the benzene ring derived from the salicyl group. In addition, the catalytic compound of the present invention is a cobalt-Schiff base complex, wherein a methyl group substituted with an amino group having an asymmetrical carbon atom or an asymmetrical axis is introduced to the 3- and/or 3'-position of the salicyl group.

EP 2 157 116 A1

## Description

[Technical Field]

The present invention relates to a method for manufacturing polycarbonate by alternating copolymerization of epoxide and carbon dioxide, and a catalyst used for the manufacturing method. In particular, the present invention relates to a method for manufacturing polycarbonate having a high stereoregularity and a catalyst used for the manufacturing method.

[Background Art]

Recently, as a technology for efficient use of carbon dioxide, a method for manufacturing polycarbonate by copolymerization of epoxide with carbon dioxide has been receiving attention. In addition, research and development aiming at novel properties and functions, and expansion of uses thereof, by controlling the stereoregularity of polycarbonate, are being carried out.
For example, control of stereoregularity by regularly introducing an optically-active center in the main chain of polycarbonate is being investigated. An optically active polycarbonate, which is obtained by alternating copolymerization of one of the enantiomers of chiral epoxide with carbon dioxide, has a main-chain structure with very high stereoregularity, and is predicted to display superior mechanical and physicochemical properties, and therefore application of a separation medium for chromatography and separation membrane, a biodegradable material, a ferroelectric material, and a piezoelectric pyroelectric material is envisioned.
While the above optically active polycarbonate could be manufactured by using one of the enantiomers of a chiral epoxide, a chiral epoxide is usually obtained as a racemic mixture, and hence in the above manufacturing method, an enantiomerically pure epoxide has to be prepared, which is very expensive. On the other hand, an optically active polycarbonate can be synthesized through enantioselective alternating copolymerization with carbon dioxide, where one of the enantiomers of a racemic epoxide is selectively copolymerized. Therefore, studies aiming at the development of an enantioselective alternating copolymerization reaction using a racemic mixture of epoxide are being carried out.
X. Lu, et al. reported that they attempted an alternating copolymerization reaction of a racemic mixture of epoxide with carbon dioxide, using a binary catalyst of a Schiff base-cobalt complex in combination with a nucleophilic reagent to obtain optically active polycarbonate (J. Am. Chem. Soc., 2006, 128, 1664-1674).
K. Nakano, et al. discovered that, in the case when the following compound belonging to the Schiff base-cobalt complex was used by itself, it could suppress the formation of by-product, cyclic carbonate, and the conversion of the propylene oxide to polycarbonate was about 80%, although the enantioselectivity was not observed (Angew. Chem., Int. Ed, 2006, 45, 7274-7277).

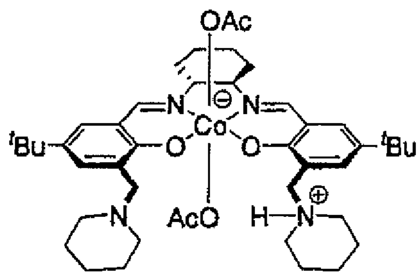

As a method for utilizing the above compound which attain such a high substrate conversion, they reported a method wherein, after all the first epoxy material (propylene oxide) is converted to a copolymer, the second epoxy material (1-butene oxide) is further added to form a different polymer chain at the end of the first polymer chain, and thereby a block copolymer is manufactured.

[Disclosure of the Invention]

However, in the synthesis of a polycarbonate copolymer, a catalyst which has superior enantioselectivity and yet shows a high substrate conversion has not been reported. Therefore, in order to further expand the possibility of controlling the stereoregularity of polycarbonate copolymers and realize a variety of stereosequence of polycarbonate,

the development of such a catalytic compound is a new challenge.

The present invention provides a method for manufacturing a polycarbonate copolymer by copolymerizing an epoxide compound as a monomer with carbon dioxide in the presence of a planar tetracoordinate-type cobalt-Schiff base complex, wherein a ligand of the Schiff base is N,N'-bis(2-hydroxybenzylidene) ethylenediamine (salen), N,N'-bis (2-hydroxybenzylidene) phenylenediamine (salph) or a derivative thereof, and a methyl group substituted with an amino group having an asymmetrical carbon atom or an asymmetrical axis, is introduced to the 3- and/or 3'-position of the benzene ring derived from the salicyl group.

In addition, another aspect of the present invention provides a cobalt-Schiff base complex usable as a polymerization catalyst for manufacturing polycarbonate, wherein a methyl group substituted with an amino group having an asymmetrical carbon atom or an asymmetrical axis is introduced to the 3- and/or 3'-position of the salicyl group.

The cobalt complex compound of the present invention attain a high enantioselectivity when using a racemic mixture of epoxide. Therefore, a variety of polycarbonate copolymers with a controlled stereoregularity can be manufactured from the racemic mixture of epoxide and carbon dioxide.

[Best Mode for Carrying out the Invention]

The cobalt complex used as a catalyst in the present invention comprises a Schiff base that is a planar tetradentate ligand. The typical Schiff base ligand is a salen ligand (N,N'-bis(salicylidene) ethylenediamine) and a derivative thereof (hereinafter, referred to as a "salen-type ligand"). The salen-type ligand is obtained by a dehydration condensation reaction of salicylaldehyde and ethylenediamine, and by using another diamine instead of ethylenediamine or by introducing a substituent in the aromatic ring part of salicylic acid, a variety of derivatives can be obtained. Specifically preferable compounds among such derivatives are the salcy ligand (N,N'-bis(salicylidene)-1,2-cyclohexanediamine) which is obtained by modifying the ethylenediamine part of the salen ligand to cyclohexanediamine and a derivative thereof, or the salph ligand (N,N'-bis(salicylidene)-phenylenediamine), in which the ethylenediamine part is replaced by phenylenediamine, and a derivative thereof.

A methyl group substituted with an amino group having an asymmetrical carbon center or an asymmetrical axis (hereinafter, referred to as an "arm") can be introduced to the 3- and/or 3'-position of the salicyl group contained in these salen-type ligands. In the case when the arms are introduced into both 3- and 3'-positions, the two substituents may be the same or different. The amino group constituting the arm may be a tertiary amino group, preferably is a pyrrolidinyl group or a piperidinyl group, and most preferably is a pyrrolidinyl group. Thus, for example, in the case when the amino group constituting the arm is a pyrrolidinyl group with a single substituent, the carbon of the 5-membered ring to which the substituent is bound is the asymmetrical center, showing optical activity. Below, specific examples of the arm are shown (Note: they are not limited to the following substituents).

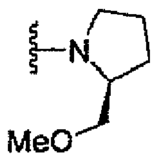

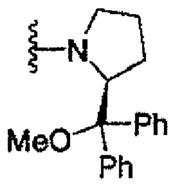

The absolute configuration around the asymmetrical carbon center or the asymmetrical axis defining the configuration of the amino group constituting the arm is either (R) or (S). The absolute configuration of the arm can be selected and introduced depending on the absolute configuration of a polycarbonate having the desired optical activity.

The central metal of the above cobalt complex is involved in the polymerization reaction of the present invention, and so one or two reactive ligands can coordinate along the axial directions of the central metal so that the cobalt metal can easily react with the substrate. The most typical ligands are carboxylates, halogens, etc., and a preferable one is acetonate ($AcO^-$).

Consequently, a preferable cobalt-Schiff base complex is the compound represented by the following formula:

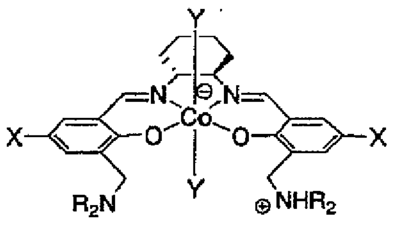

$NR_2$: 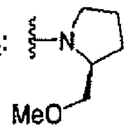 or 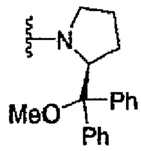

wherein,

X represents any one group or atom selected from the group consisting of H, $C_{1-20}$ alkyl, $C_{1-20}$ alkoxy, $C_{6-20}$ aryl, F, Cl, Br, and I, and Y represents an anionic ligand selected from the group consisting of aliphatic carboxylate, aromatic carboxylate, $Cl^-$, $Br^-$, and $I^-$.

A specifically preferable cobalt-Schiff base complex of the present invention is the compound represented by the following formula.

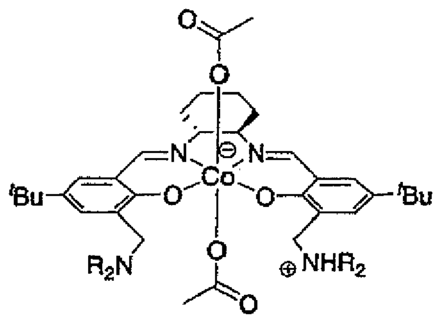

$NR_2$: 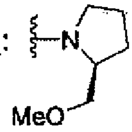 or 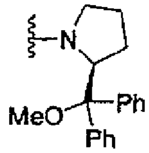

The catalytic system used in the present invention shows by itself a sufficient catalytic activity and displays a superior enantioselectivity without the use of a promoter such as a nucleophilic reagent, or the like. Further, in the present invention, as well as conventional catalytic systems used for manufacturing a polycarbonate copolymer, a combined catalyst system of a cobalt-Schiff base complex in combination with a promoter such as a nucleophilic reagent, or the like, may be used.

In addition, the catalyst of the present invention is characteristic in that the substrate conversion can reach to 100% (That is, it is possible to consume the substrate completely). In relation with this characteristic, the present invention has a preferable aspect as shown below.

Namely, when an alternating copolymerization of a racemic mixture of chiral epoxide as a monomer with carbon dioxide is carried out in the presence of a catalyst of the present invention, one of the enantiomers of the monomer is selectively consumed at the beginning, and so until this enantiomer is completely consumed, an optically active polymer preferentially containing an asymmetrical carbon center with either the S or R absolute configuration in a polymer main chain is produced.

Therefore, according to one aspect of the present invention, one of the enantiomers contained in the monomer is selectively consumed, and thus an optically active polycarbonate preferentially containing an asymmetric carbon center with either the S or R absolute configuration in a polymer main chain can be manufactured, by terminating the polymerization reaction with a reaction terminator, before this enantiomer is completely consumed.

In addition, when one of the enantiomers is completely consumed for the polymerization reaction in the presence of the catalyst of the present invention followed by a further polymerization reaction, the another enantiomer, which was unused, is incorporated into the polymer main chain, and a polymer chain with an absolute configuration opposite to that of the above polymer chain is added.

Therefore, according to another aspect of the present invention, after one of the enantiomers is completely consumed, a further polymerization reaction can manufacture a polycarbonate comprised of a block which preferentially contains an asymmetrical carbon center with the S absolute configuration and a block which preferentially contains an asymmetrical carbon center with the R absolute configuration in one polymer chain.

Further, when an alternating copolymerization using a meso-epoxide compound as a monomer with carbon dioxide in the presence of a catalyst of the present invention is carried out, ring opening of the epoxy ring and polymerization occur stereoselectively.

Therefore, according to a further different aspect of the present invention, polycarbonate comprised of asymmetrical carbon centers with only either the (R, R) or (S, S) absolute configuration in a polymer main chain and having a high stereoregularity (and yet having optical activity) can be manufactured.

In addition, according to the manufacturing method utilizing a catalyst of the present invention, it is possible to completely consume the substrate, and so complete consumption of the first epoxide followed by addition of the same epoxide or a different second epoxide can synthesize a block polymer having a high streoregularity.

Therefore, according to the manufacturing method of the present invention, the adequate adjustment not only of the component ratio of the enantiomers contained in the monomer, but also of the type of epoxide and the order of addition enables to manufacture a variety of polycarbonate copolymers having controlled stereoregularity.

A preferable aspect of the present invention comprises polycarbonate having a novel block copolymer structure. Namely, the polycarbonate of the present invention is a block copolymer comprised of a block which preferentially contains an asymmetrical carbon center with the S absolute configuration and a block which preferentially contains an asymmetrical carbon center with the R absolute configuration in a polymer main chain. Further, the polycarbonate of the present invention is a block copolymer comprised of a block which contains an asymmetrical carbon center with only the S absolute configuration and a block which contains an asymmetrical carbon center with only the R absolute configuration in a polymer main chain.

The molar ratio of one of the enantiomers of epoxide, which is preferentially incorporated in one block, can be a value of 60% or more, preferably 70% or more, and more preferably 75% or more, based on the total amount of the epoxide monomer incorporated in the block.

An epoxide compound usable as a monomeric material for the manufacturing method of the present invention comprises both a chiral epoxide and a meso-epoxide. Specifically, it can comprise epoxides represented by the following formula:

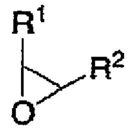

wherein,

$R^1$ and $R^2$ may be the same or different with the proviso that they are not concurrently a hydrogen atom, and further, $R^1$ and $R^2$ are independently a hydrogen atom, a halogen atom, a substituted amino group ($-NR^3R^4$), cyano, linear or branched $C_1$ to $C_{20}$ alkyl, $C_2$ to $C_{20}$ alkenyl or $C_2$ to $C_{20}$ alkynyl, $C_4$ to $C_{10}$ cycloalkyl, $C_6$ to $C_{40}$ aryl or $C_7$ to $C_{40}$ arylalkyl, or $R^1$ and $R^2$ together may form a saturated or unsaturated $C_4$ to $C_{10}$ alicyclic group;

the aryl moiety in the aryl or arylalkyl and the alicyclic group may be substituted with one or more substituents selected from the group consisting of a halogen atom, linear or branched $C_1$ to $C_{20}$ alkyl, $C_2$ to $C_{20}$ alkenyl or $C_2$ to $C_{20}$ alkynyl, and $C_4$ to $C_{20}$ cycloalkyl, or

two substituents bound to two adjacent carbons in the aryl ring may together form a saturated or unsaturated $C_4$ to $C_{10}$ alicyclic group;

the alkyl, alkenyl, alkynyl and cycloalkyl, aryl and alicyclic groups may contain at least one heteroatom, wherein the heteroatom is at least one atom selected from the group consisting of nitrogen, oxygen, sulfur, phosphorus, and silicon;

the halogen is at least one atom selected from the group consisting of fluorine, chlorine, bromine, and iodine,

$R^3$ and $R^4$ are linear or branched $C_1$ to $C_{20}$ alkyl, $C_2$ to $C_{20}$ alkenyl or $C_2$ to $C_{20}$ alkynyl, $C_4$ to $C_{10}$ cycloalkyl, or $C_6$ to $C_{40}$ aryl or $C_7$ to $C_{40}$ arylalkyl, or

$R^3$ and $R^4$ together may form a saturated or unsaturated $C_4$ to $C_{10}$ alicyclic group; and further

the heteroatom can be present in the following forms:

an oxygen atom may be involved in the alkyl chain of the alkyl and arylalkyl to form an ether bond, thereby forming an aryloxy group. In addition, oxygen may form carbonyl (C=O) with a carbon atom of an alkyl chain (including both cyclic and noncyclic),

it may provide an ester structure or an amide structure together with oxygen or nitrogen adjacent to the carbonyl;

when S is present in place of oxygen, it can form a structure such as thioether, thionyl (C=S), thioester, and the like.

More preferably, the epoxide compound usable for the manufacturing method of the present invention is a chiral epoxide or a meso-epoxide represented by the following formula:

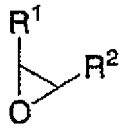

wherein,
$R^1$ and $R^2$ may be the same or different with the proviso that they are not concurrently a hydrogen atom, and further, $R^1$ and $R^2$ are independently a hydrogen atom, linear or branched $C_1$ to $C_8$ alkyl, $C_2$ to $C_8$ alkenyl or $C_2$ to $C_8$ alkynyl, $C_4$ to $C_8$ cycloalkyl, or $C_6$ to $C_{16}$ aryl or $C_7$ to $C_{20}$ arylalkyl, or
$R^1$ and $R^2$ together may form a saturated or unsaturated $C_4$ to $C_8$ alicyclic group;
the aryl moiety in the aryl or arylalkyl and the alicyclic group may be substituted with one or more substituents selected from the group consisting of a halogen atom, linear or branched $C_1$ to $C_8$ alkyl, $C_2$ to $C_8$ alkenyl or $C_2$ to $C_8$ alkynyl, and $C_4$ to $C_8$ cycloalkyl, or
two substituents bound to two adjacent carbons in the aryl ring may together form a saturated or unsaturated $C_4$ to $C_8$ alicyclic group;
the alkyl, alkenyl, alkynyl and cycloalkyl, aryl and alicyclic groups may contain at least one heteroatom,
the halogen is at least one atom selected from the group consisting of fluorine, chlorine, bromine, and iodine.

As a specific example for an specifically preferable chiral epoxide as the monomer for the manufacturing method of the present invention, propylene oxide, 1-butene oxide, 1-pentene oxide, 2-pentene oxide, 1-hexene oxide, 1-octene oxide, 1-dodecene oxide, styrene oxide, vinylcyclohexene oxide, 3-phenylpropylene oxide, 3,3,3-trifluoropropylene oxide, 3-naphthylpropylene oxide, butadiene monoxide, 3-trimethylsilyloxypropylene oxide, etc., are exemplified, and above all, propylene oxide is preferable. These chiral epoxides are usable as a racemic mixture (Note: it is not limited to these).

Likewise, as a specific example for an specifically preferable meso-epoxide as the monomer, 2-butene oxide, cyclopentene oxide, and cyclohexene oxide are exemplified (Note: it is not limited to these).

On the other hand, carbon dioxide which is subjected to copolymerization with a chiral epoxide is introduced into a reaction vessel in a gaseous form, and used for the reaction. In addition, the alternating copolymerization reaction of the present invention is preferably carried out under inert atmosphere in order to exclude the influence of oxygen, etc., and so carbon dioxide coexists with an inert gas in the reaction vessel. The carbon dioxide pressure in the reaction vessel is 0.1 to 6 MPa, and preferably is 1.0 to 3.0 MPa. The molar ratio of epoxide to carbon dioxide which are used for the reaction is typically 1:0.1 to 1:10, preferably is 1:0.5 to 1:3.0, and more preferably is 1:1.0 to 1:2.0.

The copolymerization reaction of the present invention may be carried out in a solvent or without the use of a solvent. When a solvent is used, toluene, methylene chloride, 1,2-dimethoxyethane, etc., may be used, and 1,2-dimethoxyethane is preferable.

The alternating copolymerization of the present invention can be carried out at a temperature in the range of approximately 0 to 60°C, and in general, it is carried out at room temperature. The alternating copolymerization reaction can continue in the presence of excess amounts of carbon dioxide until the epoxide is completely consumed, or after sufficient progression of the reaction over several to several tens of hours, the reaction may be terminated with an adequate reaction terminator. Any reaction terminator is usable without particular restriction as far as it is a conventional reagent for terminating the polymerization reaction for polycarbonate. For example, a compound having an active proton such as alcohol (for example, methanol), water, acid (for example, hydrochloric acid) can be used. After the alternating copolymerization is finished, the unreacted material and the solvent (when a solvent is used) are distilled away, and the resulting reaction product is purified by an adequate means such as reprecipitation or others.

The molecular weight of the polycarbonate manufactured by the present invention is typically 1,000 or higher, preferably is 2,000 to 1,000,000, and even more preferably 3,000 to 100,000, based on the number average molecular weight $M_n$ measured by gel permeation chromatography (GPC; polystyrene equivalent).

The optically active polycarbonate obtained by the manufacturing method of the present invention can possess a relatively narrow molecular weight distribution ($M_w/M_n$). Specifically, it is less than 4, more preferably less than 2.5, and most preferably is approximately 1.0 to approximately 1.6.

[Examples]

The present invention is more specifically explained by the following examples; however, the present invention is not limited to these examples.

The measurement of $^1$H NMR spectrum of the compounds obtained in the examples of the present invention was carried out using a JNM-ECP500 (500 MHz) manufactured by JEOL Ltd.

The molecular weight of optically active polycarbonate was measured by using a high performance liquid chromatography system (DG660B/PU713/UV702/RI704/C0631A) manufactured by GL Sciences Inc., and two Shodex KF-804F columns manufactured by Showa Denko, K.K. with tetrahydrofuran as an eluate (40°C, 1.0 mL/min), standardized with a polystyrene standard, and was obtained by processing the data with analysis software (EZChrom Elite manufactured by Scientific Software, Inc.).

Further, in the examples of the present invention, the optical purity of the optically active epoxide, which was not reacted, was estimated by the enantiomeric excess percentage (%ee) which is calculated by converting the epoxide to a corresponding cyclic carbonate. In order to obtain the enantiomeric excess percentage, measurement was carried out by using a gas chromatograph system (GC-2010) manufactured by Shimadzu Corporation and an analytical column (CHIRASIL-DEX CB manufactured by Chrompack Inc.) with helium as a carrier gas. The enantiomeric excess percentage was estimated according to the following formula with the peak areas (referred to as $A_R$ and $A_S$ for the peak area of the R and S isomers, respectively)

$$\text{Enantiomer excess percentage (\%ee)} = 100 \times |A_R - A_S| / (A_R + A_S)$$

Further, the following indicator ($k_{rel}$) representing a selectivity showing which enantiomer of the racemic body was preferentially incorporated into the polymer was estimated according to the formula below.

$$k_{rel} = \ln[1-c(1+ee)]/\ln[1-c(1-ee)]$$

Here, ee is the enantiomeric excess of the unreacted epoxide obtained by the above method, and c is the conversion of epoxide.

(1) Preparation of the catalyst

Dichloromethane and tetrahydrofuran used as solvents in the synthesis examples below were of anhydrous grade obtained from Kanto Chemical Co., Inc. and were used after passed through a solvent purifying apparatus manufactured by Glass Contour. Ethanol obtained from Kanto Chemical Co., Inc. was used, without purification.

Cobalt acetate was obtained from Kanto Chemical Co., Inc. Glacial acetic acid was obtained from Aldrich Chemical Co., Inc., and was used without purification. (1R, 2R)-1,2-diaminocyclohexane was obtained from Tokyo Chemical Industry Co., Ltd. and used without purification. (S)-2-(diphenylmethoxymethyl)pyrrolidine was prepared according to the method described in the publications [(1) Enders, D.; Kipphardt, H.; Gerdes, P.; Brena-Valle, L. J.; Bhushan, V. Bull. Soc. Chim. Belg. 1988, 8-9, 691-704. (2) Ho, C. Y.; Chen, Y. C.; Wong, M. K.; Yang, D. J. Org. Chem. 2005, 70, 898-906.].

Salicylaldehyde derivative 3 used as a material in the following ligand synthesis was prepared according to the publication (DiMauro, E. F.; Kozlowski, M. C. Org. Lett. 2001, 3, 3053-3056).

Further, the known Schiff base compound 1a used for the following complex synthesis was prepared according to the publication (DiMauro, E. F.; Kozlowski, M. C. Org. Lett. 2002, 4, 3781-3784).

<u>Synthesis Example A: Synthesis of a novel Schiff base compound</u>

<u>A-1. Synthesis of Salcy ligand 1b</u>

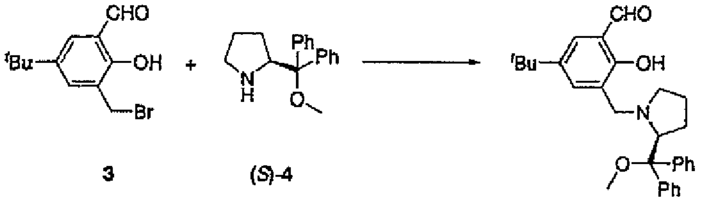

3 (S)-4 (S)-5

Under argon gas atmosphere, salicylaldehyde derivative 3 (248mg, 0.91 mmol) and tetrahydrofuran (10 mL) were put into a 20 mL Schlenk flask, to which (S)-2-(diphenylmethoxymethyl)pyrrolidine [(S)-4, 450 mg, 1.7 mmol] dissolved in tetrahydrofuran (20 mL) was slowly added. After stirring at 25°C for 2 hours, the resulting precipitate was filtered off, and the filtrate was concentrated to give a salicylaldehyde derivative (S)-5 (384 mg, 84% yield).
$^1$H NMR ($CDCl_3$, 500 MHz) δ 10.29 (s, 1H), 7.56-7.50 (m, 5H), 7.40-7.29 (m, 8H), 4.36 (d, J = 13.5 Hz, 1H), 3.99 (dd, J = 9.9, 4.1 Hz, 1H), 3.68 (d, J = 13.7 Hz, 1H), 2.96 (s, 3H), 2.38-2.34 (m, 1H), 2.20-2.15 (m, 1H), 2.10-2.02 (m, 1H), 1.86-1.80 (m, 1H), 1.46-1.40 (m, 1H), 1.30 (s, 9H), 0.72-0.62 (m, 1H).

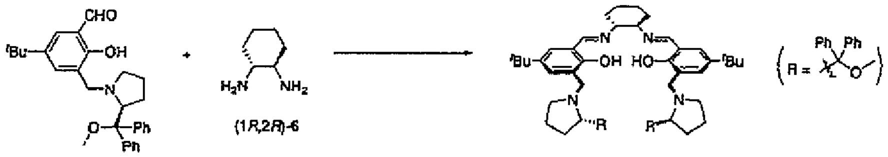

(S)-5 (1R,2R)-6 1b

The obtained salicylaldehyde derivative (S)-5 (178 mg, 0.39 mmol) was dissolved in ethanol (1.0 mL) and methylene chloride (3.0 mL), to which (1R,2R)-1,2-diaminocyclohexane [(1R,2R)-6, 22 mg, 0.19 mmol] dissolved in ethanol (3.0 mL) was added. After stirring at 25°C for 12 hours, the resulting mixture was concentrated to give the desired salcy ligand 1b (190 mg, 99% yield).
$^1$H NMR ($CDCl_3$, 500 MHz) δ 8.24 (s, 2H), 7.63 (d, J = 7.3 Hz, 4H), 7.60 (d, J = 7.6 Hz, 4H), 7.40-7.21 (m, 16H), 6.95 (d, J = 2.1 Hz, 2H), 3.99 (dd, J = 9.6, 3.2 Hz, 2H), 3.92 (d, J = 13.1 Hz, 2H), 3.81 (d, J = 14.2 Hz, 2H), 3.30-3.25 (m, 2H), 2.90 (s, 6H), 2.45-2.39 (m, 2H), 2.10-2.03 (m, 2H), 2.00-1.60 (m, 12H), 1.48-1.41 (m, 2H), 1.22 (s, 18H), 0.38-0.29 (m, 2H).

Synthesis Example B: Synthesis of a novel cobalt-Schiff base complex

B-1. Synthesis of Complex 2a

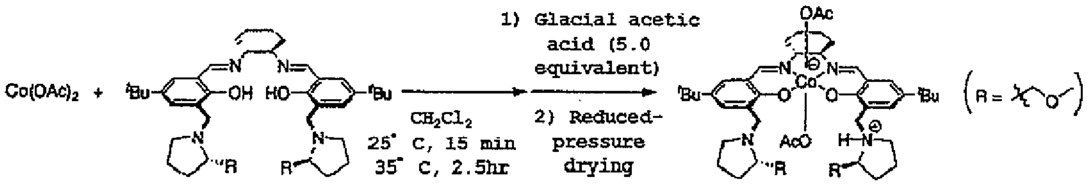


1a 2a

Under argon gas atmosphere, cobalt acetate (29 mg, 0.16 mmol), salcy ligand 1a (110 mg, 0.16 mmol), and dichloromethane (1.0 mL) were put into a 20 mL Schlenk flask. The resulting mixture was stirred at room temperature for 15 min, and then at 35°C for 2.5 hours. Glacial acetic acid (65 mL) dissolved in dichloromethane (2.0 mL) was added and stirred in the presence of air for 3.5 hours. After removal of volatile components under reduced pressure, followed

by sufficient drying, the desired cobalt complex 2a was quantitatively obtained as a red-brown solid.

$^1$H NMR ($CDCl_3$, 500 MHz) δ 7.64(s, 2H), 7.40 (d, J = 2.2 Hz, 2H), 7.29 (d, J = 2.2 Hz, 2H), 5.21 (d, J = 12.1 Hz, 2H), 4.31 (d, J = 12.1 Hz, 2H), 4.12-4.06 (m, 2H), 4.01 (d, J = 8.2 Hz, 2H), 3.93-3.88 (m, 2H), 3.76-3.71 (m, 2H), 3.67-3.62 (m, 2H), 3.49-3.41 (m, 6H), 2.91 (d, J = 11.0 Hz, 2H), 2.06-1.86 (m, 10H), 1.77-1.68 (m, 4H), 1.60-1.54 (m, 2H), 1.34-1.24 (m, 24H).

B-2. Synthesis of Complex 2b

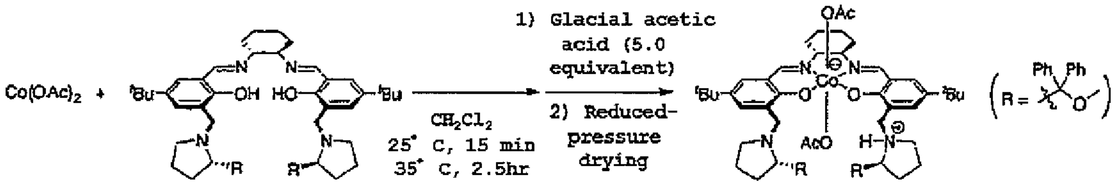


1b

2b

Under argon gas atmosphere, cobalt acetate (23 mg, 0.13 mmol), salcy ligand 1b (127 mg, 0.13 mmol), and dichloromethane (1.0 mL) were put into a 20 mL Schlenk flask. The resulting mixture was stirred at room temperature for 15 min, and then at 35°C for 2.5 hours. After the temperature was lowered to 25°C, glacial acetic acid (50 mL) dissolved in dichloromethane (2.0 mL) was added and stirred in the presence of air for 3 hours. After removal of volatile components under reduced pressure, followed by sufficient drying, the desired cobalt complex 2b was quantitatively obtained as a red-brown solid.

(2) Manufacturing of polycarbonate

Propylene oxide used in the following polymerization experiments was obtained from Tokyo Chemical Industry Co., Ltd., and dehydrated with calcium hydride, and then distilled under argon atmosphere.

Complex 6 used for manufacturing polycarbonate below was prepared according to the above-described K. Nakano, et al., Angew. Chem., Int. Ed, 2006, 45, 7274-7277.

The substrate conversion was estimated according to the following. Namely, after the polymerization, phenanthrene was added as an internal standard to the reaction mixture, a part of the resulting mixture was extracted, and then a $^1$H NMR measurement was carried out. According to the individual peak areas of phenanthrene, polypropylene carbonate (PPC), and propylene carbonate (PC), yields of PPC and PC were estimated, and their sum was regarded as the substrate conversion.

Example 1: Manufacturing of polypropylene carbonate using cobalt complex 2a of the present invention

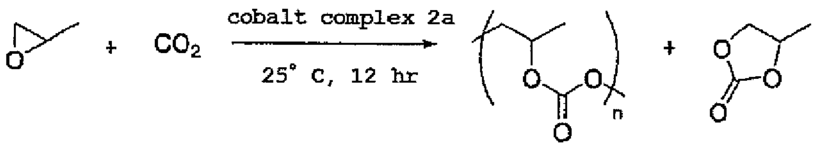


polypropylene carbonate

propylene carbonate

Substrate conversion: 32%
Copolymer selectivity: >99%
Number average molecular weight: 15,400 g·mol$^{-1}$
Polydispersity: 1.12

Under argon gas atmosphere, cobalt complex 2a (12.4 mg, 0.014 mmol) and propylene oxide (2.0 mL, 28.6 mmol) were put into an autoclave, to which carbon dioxide (1.4 MPa) was injected and then stirred at 25°C for 12 hours. The carbon dioxide pressure was released, and a most part of the unreacted propylene oxide was recovered under reduced pressure. After a solid crude product remaining in the autoclave was transferred with dichloromethane into a round-bottom flask, followed by concentration and vacuum drying, a crude product of copolymer was obtained. [32% NMR yield (internal standard substance: phenanthrene), $[\alpha]_D^{25}$ = -10° (c = 0.50, $CHCl_3$)].

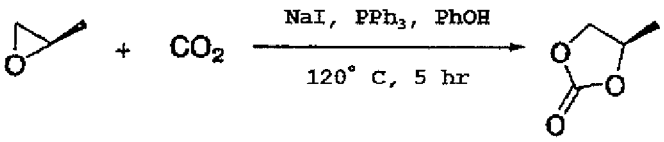


propylene carbonate

Enantiomeric excess percentage: 13.3% [R-isomer]

The unreacted epoxide which was recovered, sodium iodide (21 mg, 0.14 mmol), triphenylphosphine (38 mg, 0.14 mmol), and phenol (14 mg, 0.14 mmol) were put into an autoclave, to which carbon dioxide (4.0 MPa) was injected and then stirred at 120°C for 5 hours. The carbon dioxide pressure was released, and a part of the reaction mixture was extracted to determine the enantiomeric excess percentage of the resulting propylene carbonate by gas chromatography (13.3%ee). $k_{rel}$ = 2.0 was calculated according to the above formula.

Example 2: Manufacturing of polypropylene carbonate using Cobalt complex 2b of the present invention

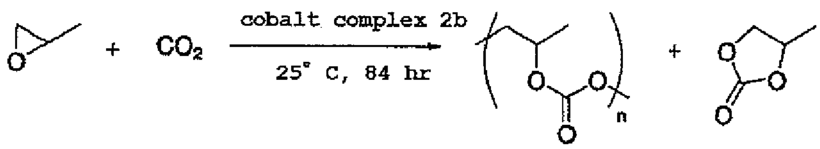


polypropylene carbonate

propylene carbonate

Substrate conversion: 28%
Copolymer selectivity: 87%
Number average molecular weight: 13,400 g·mol$^{-1}$
Polydispersity: 1.16

Under argon gas atmosphere, cobalt complex 2b (17 mg, 0.014 mmol) and propylene oxide (2.0 mL, 28.6 mmol) were put into an autoclave, to which carbon dioxide (1.4 MPa) was injected and then stirred at 25°C for 84 hours. The carbon dioxide pressure was released, and a most part of the unreacted propylene oxide was recovered under reduced pressure. After a solid crude product remaining in the autoclave was transferred with chloroform into a round-bottom flask, followed by concentration and vacuum drying, a crude product of copolymer was obtained. [24% NMR yield (internal standard substance: phenanthrene)].

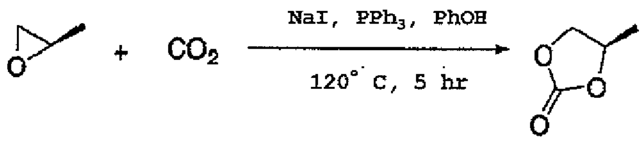


propylene carbonate

Enantiomeric excess percentage: 15.4% [R-isomer]

The unreacted epoxide, which was recovered, sodium iodide (21 mg, 0.14 mmol), triphenylphosphine (38 mg, 0.14 mmol), and phenol (14 mg, 0.143 mmol) were put into an autoclave, to which carbon dioxide (4.0 MPa) was injected and then stirred at 120°C for 5 hours. The carbon dioxide pressure was released, and a part of the reaction mixture was extracted to determine the enantiomeric excess percentage of the resulting propylene carbonate by gas chromatography (15.4%ee). $k_{rel}$ = 2.7 was calculated according to the above formula.

Comparative Example 1: Manufacturing of polypropylene carbonate using the known Cobalt complex 6

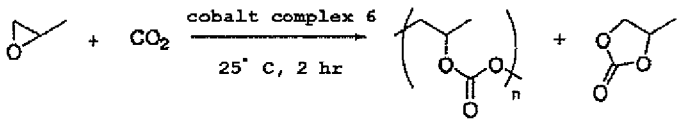


polypropylene carbonate

propylene carbonate

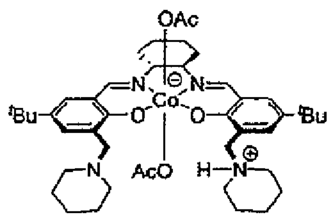

cobalt complex 6

Substrate conversion: 30%
Copolymer selectivity: 98%
Number average molecular weight: 12,200 $g \cdot mol^{-1}$
Polydispersity: 1.15

Under argon gas atmosphere, cobalt complex 6 (12 mg, 0.014 mmol) and propylene oxide (2.0 mL, 28.6 mmol) were put into an autoclave, to which carbon dioxide (1.4 MPa) was injected and then stirred at 25°C for 2 hours. The carbon dioxide pressure was released, and a most part of the unreacted propylene oxide was recovered under reduced pressure. After a solid crude product remaining in the autoclave was transferred with chloroform into a round-bottom flask, followed by concentration and vacuum drying, a crude product of copolymer was obtained. [29% NMR yield (internal standard substance: phenanthrene)].

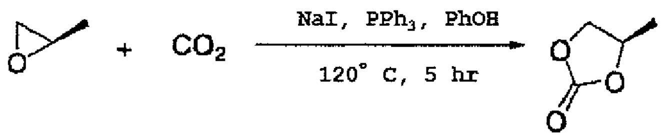


propylene carbonate

Enantiomeric excess percentage: 0%

The unreacted epoxide which was recovered, sodium iodide (21 mg, 0.143 mmol), triphenylphosphine (38 mg,

0.143 mmol), and phenol (14 mg, 0.143 mmol) were put into an autoclave, to which carbon dioxide (4.0 MPa) was injected and then stirred at 120°C for 5 hours. The carbon dioxide pressure was released, and a part of the reaction mixture was extracted to determine the enantiomeric excess percentage of the resulting propylene carbonate by gas chromatography (O%ee). $k_{rel}$ = 1.0 was calculated according to the above formula.

The results of Examples 1 and 2, and Comparative Example 1 are compared and shown in the table below.

Comparison of the results of Examples 1 and 2, and Comparative Example 1

| Catalyst | Number average molecular weight (g.mol$^{-1}$) | Polydispersity $M_w/M_n$ | Reaction rate ratio $k_{rel}$ |
|---|---|---|---|
| 2a | 15,400 | 1.12 | 2.0 |
| 2b | 13,700 | 1.16 | 2.7 |
| 6 | 12,200 | 1.15 | 1 |

Example 3: Manufacturing of polypropylene carbonate using cobalt complex 2a of the present invention (the case when a high substrate conversion rate was attained)

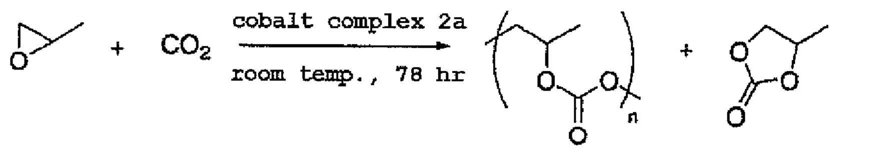


polypropylene carbonate

propylene carbonate

Substrate conversion: 84%
Copolymer selectivity: >99%
Number average molecular weight: 39,800 g·mol$^{-1}$
Polydispersity: 1.16

Under argon gas atmosphere, cobalt complex 2a (12 mg, 0.014 mmol) and propylene oxide (2.0 mL, 28.6 mmol) were put into an autoclave, to which carbon dioxide (1.4 MPa) was injected and then stirred at 25°C for 78 hours. The carbon dioxide pressure was released, and a most part of the unreacted propylene oxide was recovered under reduced pressure. After a solid crude product remaining in the autoclave was transferred with chloroform into a round-bottom flask, followed by concentration and vacuum drying, a crude product of copolymer was obtained. [84% NMR yield (internal standard substance: phenanthrene)].

Comparative Example 2: Manufacturing of polypropylene carbonate using the known cobalt complex 6 (the case when a high substrate conversion rate was sought)

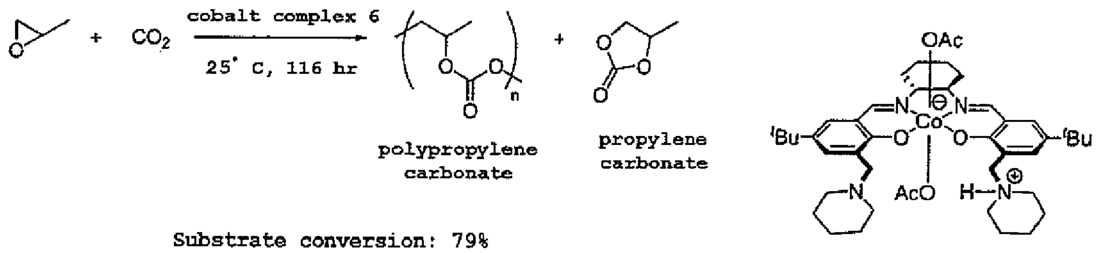


polypropylene carbonate

propylene carbonate

cobalt complex 6

Substrate conversion: 79%
Copolymer selectivity: 96%
Number average molecular weight: 83,700 g·mol$^{-1}$
Polydispersity: 1.28

Under argon gas atmosphere, cobalt complex 6 (5.9 mg, 0.0073 mmol) and propylene oxide (3.3 mL, 47.2 mmol) were put into an autoclave, to which carbon dioxide (1.4 MPa) was injected and then stirred at 25°C for 116 hours. The carbon dioxide pressure was released, and a most part of the unreacted propylene oxide was recovered under reduced pressure. After a solid crude product remaining in the autoclave was transferred with chloroform into a round-bottom flask, followed by concentration and vacuum drying, a crude product of copolymer was obtained. [76% NMR yield (internal standard substance: phenanthrene)].

## Claims

1. A method for manufacturing a polycarbonate copolymer by copolymerizing an epoxide compound as a monomer with carbon dioxide in the presence of a planar tetracoordinate-type cobalt-Schiff base complex, wherein a ligand of the Schiff base is N,N'-bis(2-hydroxybenzylidene) ethylenediamine, N,N'-bis(2-hydroxybenzylidene) phenylenediamine, or a derivative thereof, and a methyl group substituted with an amino group having an asymmetrical carbon atom or an asymmetrical axis is introduced to the 3- and/or 3'-position of the benzene ring derived from the salicyl group.

2. A method according to claim 1, wherein the monomer is a racemic mixture of a chiral epoxide compound.

3. A method according to claim 2 comprising,
terminating the polymerization reaction by a reaction terminator before one of the enantiomers contained in the monomer is completely consumed in the polymerization reaction, to obtain polycarbonate preferentially containing an asymmetric carbon center with either the S or R absolute configuration in a polymer main chain.

4. A method according to claim 2 comprising,
continuing the polymerization reaction even after one of the enantiomers contained in the monomer is completely consumed, to obtain polycarbonate comprised of a block which preferentially contains an asymmetrical carbon center with the S absolute configuration and a block which preferentially contains an asymmetrical carbon center with the R absolute configuration in a polymer main chain.

5. A method according to claim 1, wherein the monomer is a meso-epoxide compound.

6. A method according to any one of claims 1, 2, 4, and 5, further comprising,
after the monomer is completely consumed in the alternating copolymerization reaction with carbon dioxide, carrying out an alternating copolymerization reaction with carbon dioxide by adding either the same epoxide compound or a different kind of epoxide compound from the one used as the monomer.

7. A method according to any one of claims 1 to 6, wherein the Schiff base is N,N'-bis(2-hydroxybenzylidene)cyclohexanediamine.

8. A method according to any one of claims 1 to 7, wherein the amino group is a pyrrolidinyl group, and the pyrrolidinyl group is substituted so that the carbon atom at the 2-position is the asymmetrical center.

9. A method according to claim 8, wherein the pyrrolidinyl group is any one group selected from the group consisting

of an (S)-2-methoxymethyl-1-pyrrolidinyl group and an (S)-2-diphenyl(methoxy)methyl-1-pyrrolidinyl group.

**10.** A method according to any one of claims 1 to 9, wherein the cobalt-Schiff base complex is a compound represented by the following formula:

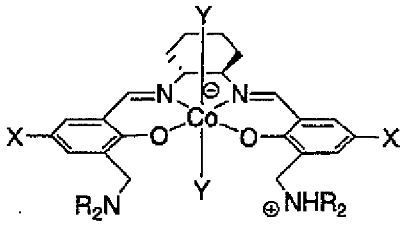

$NR_2$:

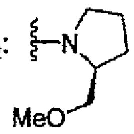

or

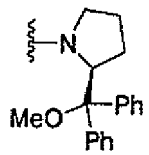

wherein,
X represents any one group or atom selected from the group consisting of H, $C_{1-20}$ alkyl, $C_{1-20}$ alkoxy, $C_{6-20}$ aryl, F, Cl, Br, and I, and Y represents an anionic ligand selected from the group consisting of aliphatic carboxylate, aromatic carboxylate, $Cl^-$, $Br^-$, and $I^-$.

**11.** A method according to any one of claims 1 to 9, wherein the cobalt-Schiff base complex is a compound represented by the following formula.

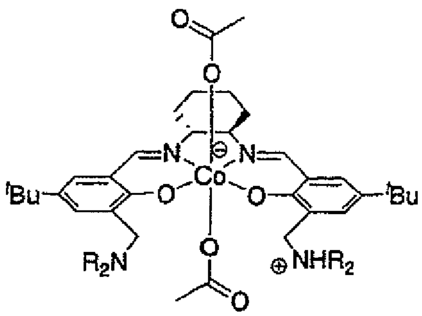

$NR_2$:

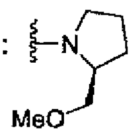

or

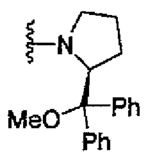

**12.** A compound represented by the following formula:

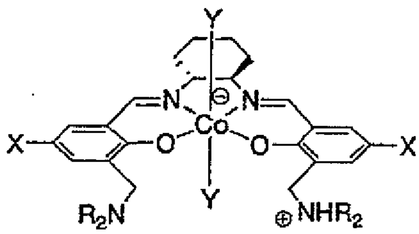

$NR_2$:

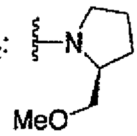

or

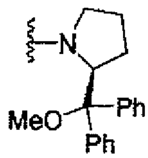

wherein,
X represents any one group or atom selected from the group consisting of H, $C_{1-20}$ alkyl, $C_{1-20}$ alkoxy, $C_{6-20}$ aryl, F, Cl, Br, and I, and Y represents an anionic ligand selected from the group consisting of aliphatic carboxylate, aromatic carboxylate, $Cl^-$, $Br^-$, and $I^-$.

**13.** A compound represented by the following formula.

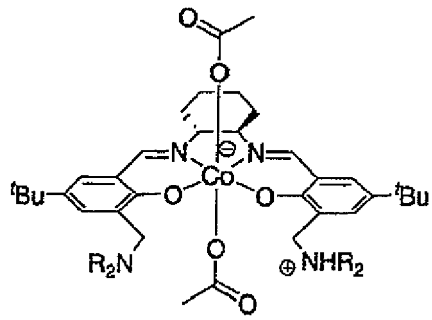

$NR_2$: 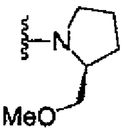 or 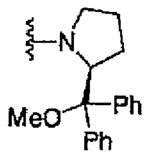

**INTERNATIONAL SEARCH REPORT**

International application No.
PCT/JP2008/060813

A. CLASSIFICATION OF SUBJECT MATTER
*C08G64/34*(2006.01)i

According to International Patent Classification (IPC) or to both national classification and IPC

B. FIELDS SEARCHED

Minimum documentation searched (classification system followed by classification symbols)
C08G64/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
CA(STN)

C. DOCUMENTS CONSIDERED TO BE RELEVANT

| Category* | Citation of document, with indication, where appropriate, of the relevant passages | Relevant to claim No. |
|---|---|---|
| A | CN 1560111 A (Dalian University of Technology), 05 January, 2005 (05.01.05), Claims (Family: none) | 1-13 |
| A | EP 597276 A1 (Fraunhofer-Gesellschaft zur Foerderung der Angewandten Forschung E.V.), 18 May, 1994 (18.05.94), Claims & DE 4238076 C1 | 1-13 |
| A | Xiao-Bing Lu and Yi Wang, Angewandte Chemie, International Edition, 2004, 43(27), 3574-3577 | 1-13 |
| A | Yongsheng Niu et.al., Journal of Polymer Science, Part A: Polymer Chemistry, 2007, 45(22), 5050-5056 | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 August, 2008 (01.08.08) | 12 August, 2008 (12.08.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/060813

C (Continuation). DOCUMENTS CONSIDERED TO BE RELEVANT

| Category* | Citation of document, with indication, where appropriate, of the relevant passages | Relevant to claim No. |
|---|---|---|
| A | Lei Shi, Xiao-Bing Lu et.al., Macromolecules, 39(17), 2006, 5679-5685 | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **X. Lu et al.** *J. Am. Chem. Soc.,* 2006, vol. 128, 1664-1674
- **K. Nakano et al.** *Angew. Chem., Int. Ed,* 2006, vol. 45, 7274-7277
- **Enders, D. ; Kipphardt, H. ; Gerdes, P. ; Brena-Valle, L. J. ; Bhushan, V.** *Bull. Soc. Chim. Belg.,* 1988, 8-9691-704
- **Ho, C. Y. ; Chen, Y. C. ; Wong, M. K. ; Yang, D.** *J. Org. Chem.,* 2005, vol. 70, 898-906
- **DiMauro, E. F. ; Kozlowski, M. C.** *Org. Lett.,* 2001, vol. 3, 3053-3056
- **DiMauro, E. F. ; Kozlowski, M. C.** *Org. Lett.,* 2002, vol. 4, 3781-3784